Europäisches Patentamt

European Patent Office

Office européen des brevets

(19)

(11) **EP 1 120 928 A1**

(12) **EUROPEAN PATENT APPLICATION**

(43) Date of publication:
**01.08.2001 Bulletin 2001/31**

(51) Int Cl.$^7$: **H04J 3/14**

(21) Application number: **00310069.0**

(22) Date of filing: **13.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.01.2000 EP 00101338**

(71) Applicant: **LUCENT TECHNOLOGIES INC.**
**Murray Hill, New Jersey 07974-0636 (US)**

(72) Inventors:
• **Baum, Stefan M.**
  **Erlangen, Bavaria 91058 (DE)**

• **Bleisteiner, Bernd M.**
  **Fuerth, Bavaria 90765 (DE)**
• **Dohmen, Ralf**
  **Nuernberg, Bavaria 90459 (DE)**
• **Sturm, Wolfram**
  **Nuernberg, Bavaria 90482 (DE)**
• **Wallerer, Edwin**
  **Allersberg, Bavaria 90584 (DE)**

(74) Representative:
**Buckley, Christopher Simon Thirsk et al**
**Lucent Technologies UK Ltd,**
**Intellectual Property Division,**
**5 Mornington Road**
**Woodford Green, Essex IG8 0TU (GB)**

(54) **Error indication independent of data format**

(57)    The invention provides a method and a data transmission network for indicating the occurrence of an error to a downstream user network facility (NNE) in data transmission systems of the communications technology even in the case of signals having unknown frame formats which are to be transmitted, wherein, by responding to a detected error state, an error signal having a pattern sequence which deviates from pattern sequences used for user and/or control data transmission in standardized formats, is generated and supplied to the user network facility (NNE).

Fig. 2

EP 1 120 928 A1

**Description**

The invention relates to a method for indicating a network-based error which occurs in a data transmission network during a transmission of data to a user network facility coupled to the network, and a data transmission network adapted for performing such a method.

In transmission systems of the communications technology according to the standardization guidelines of the ITU (International Telecommunication Union) such as, for example, ITU G 707 and also others, errors which occur are indicated in a defined manner.

If an error which is detected by a network facility occurs during the data transmission within a data transmission network, the network facility switches to an error state. Responding to such an error state, an alarm indication signal (AIS) is generated within a defined area of the data transmission frame structure and is forwarded in the direction of the data flow in order to indicate to a downstream network facility that an error has occurred. In this arrangement, the AIS consists of a pattern sequence comprising exclusively ones ("11111...") packaged in a signal-specific transmission frame.

In the case where a connection is not used, an ideal signal, a so-called "unequipped signal", is transmitted within a defined area of the data transmission frame structure, which signal consists of a pattern sequence comprising exclusively zeros ("000..."). However, this pattern sequence does not signify a real alarm indication but rather that this signal does not need to be considered further.

The sequences illustrated above operate between networks having the SONET (Synchronous Optical Network) and SDH (Synchronous Digital Hierarchy) formats according to ITU G 707.

However, problems occur if a termination unit, constructed as a sink, of the data transmission network is connected to an "IP router" or an "ATM network", and the terminating unit is not capable of generating an appropriate AIS. This is the case, for example, in an optical network which only provides a virtual transmission channel and is constructed to be transparent to supplied signals, i.e. transmits supplied signals as signals having an unknown data format or, respectively, unknown frame structure.

However, there is to the present day no standardization in existence for networks constructed to be transparent with respect to data of different formats which are to be transmitted.

It is thus the object of the invention to illustrate a possibility of error indication by means of which an error occurring in a data transmission network can be indicated by a termination unit of a downstream user network facility even when the data or signals to be transmitted have unknown formats.

The object is achieved by a method having the features of Claim 1 and by an improved data transmission network according to Claim 5.

According to the invention, it is provided for this purpose that, when a network-based error which has occurred in the data transmission network is detected, the transmission of the supplied signal is ended and instead a signal containing a pattern sequence is generated which deviates from the pattern sequences used for the transmission of user and/or control data in standardized formats. Since such a signal thus exhibits an unknown format for a user network facility downstream of the network, it will interpret the received signal as an error.

Suitably, a periodically alternating sequence containing a multiplicity of logical "1-0" and "0-1" transitions is generated as a pattern sequence for the error signal generated, in order to obtain a signal which essentially has no average component, as a result of which in particular any possibly erroneous interpretation as signal loss is eliminated and the clock recovery is facilitated for the downstream user network facility.

If, furthermore, the pattern sequence is generated via variably adjustable parameters, it can be adapted in a simple manner to the specific characteristics of the physical channel used. In order to ensure a particularly flexible variety of adjustments of the parameters, it is also provided to perform the adjustment by using a software-guided register facility.

In the text which follows, the invention will be described in detail by referring to the attached drawings, in which:

Figure 1 shows a greatly simplified representation of a data transmission network, to which a user network facility is connected,

Figure 2 shows a diagrammatic general representation of an unframed error signal pattern according to the invention,

Figure 3 shows a more detailed section of Figure 1 relating to linking the user network facility to the data transmission network.

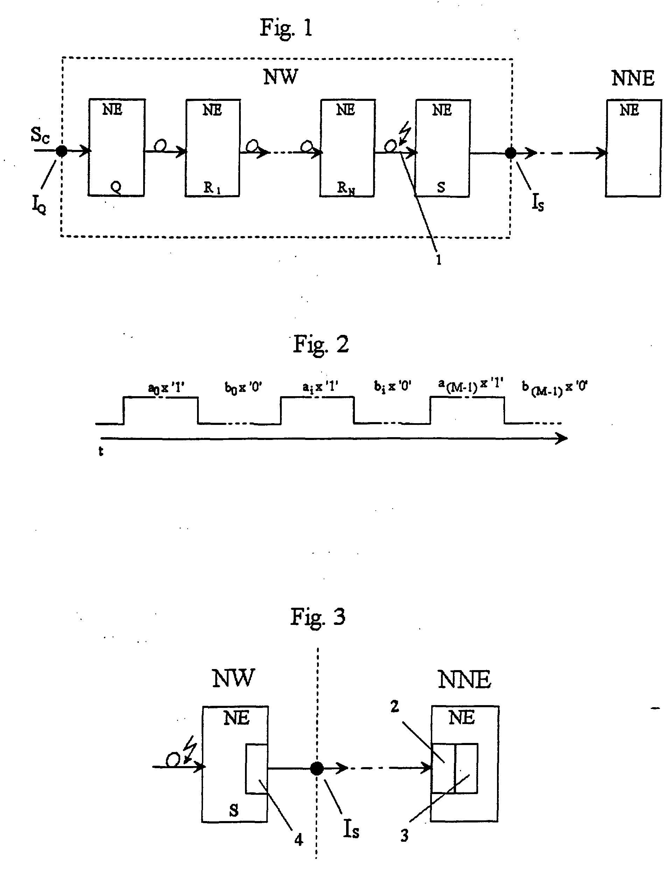

In the text which follows, the invention will be described with reference to an illustrative application, referring initially to Figure 1. Figure 1 shows a greatly simplified illustrative end-to-end configuration of a data transmission network (NW) of the communications technology. The network exhibits a network facility (NE) constructed as source Q and a network facility (NE) constructed as sink S and furthermore two further network facilities (NE) used as regenerative repeaters $R_1$, $R_N$. A signal $S_c$ to be transmitted and packed into a particular frame format C is supplied to the network via a first user-network-interface $I_Q$ connected to the source Q. A user network facility (NNE) is connected to the sink S via a second user-network-interface $I_S$.

It should be mentioned that a network according to the invention is not bound to the illustrative configuration according to Figure 1 and, in particular, can also comprise star-shaped configurations and/or various other network facilities such as is usual in networks of the communications technology.

To be able to understand the invention, however, it is of essence that the supplied signal $S_c$ to be transmitted can be packaged essentially in any standardized frame format according to the standardization guidelines of the "International Telecommunication Union" (ITU) or other standardization bodies with respect to the network-related protocol. The protocol used by the user-network facility can also be of essentially any standardized structure with respect to that used by the network. Such a frame format and protocols can correspond, for example, to the SONET, SDH, IP or ATM standards but could also be a format which will only be standardized in future.

The user-network interfaces $I_Q$ and $I_S$ only provide a defined transmission rate, for example a data rate of 10 Gbit/s. However, other characteristics with respect to the data record contained and to the format or the protocols and frame structure used, of a signal to be transmitted are not covered. Thus, the network is transparent to the supplied signal $S_c$ and transmits it as a so-called "clear-channel" signal with a network-related signal label which is added by means of the source Q.

The network NW of Figure 1 can thus be constructed, in particular, as an optical network which only provides a virtual transmission channel and, in consequence, is constructed to be transparent to supplied signals.

If then an error state, which can be detected by a network facility, occurs in the network during the transmission, the network facility switches to an error state and the termination unit of the user-network facility, responding to the error state, indicates that an error has occurred. Since the signals supplied to the network are handled as "clear-channel" signals, only network-based errors can be detected, i.e. essentially errors of a physical type, for example a line break as indicated by way of example by a lightning symbol at Point 1 in Figure 1, or errors which are based on a faulty logic operation.

Such error detections essentially operate in a manner known to the expert in this field and will therefore not be described in greater detail.

Due to the aforementioned transparent design of the network and the data format of the supplied signal, which is thus unknown to the network, however, it is not possible to generate an alarm indication signal corresponding to the standards such as, for example, the aforementioned ITU G 707, within a defined area of the data transmission frame for the purpose of error indication.

In order to indicate, nevertheless, to the user-network facility that an error has been detected during the transmission, the transmission of the supplied signal is terminated, according to the invention, and the termination unit generates a signal comprising a sequence which does not correspond to any pattern sequence conforming to a protocol. Such an unframed pattern sequence is then transmitted continuously to the user-network facility when an error occurs. Since the pattern sequence is a format which is unknown to the user-network facility, it will consequently conclude that an error is present.

So that a misinterpretation of the transmitted signal pattern sequence is essentially impossible in the following user-network facility, the sequence will preferably consist of a defined, periodically alternating pattern comprising a multiplicity of logical "1-0" and "0-1" transmissions.

Such an unframed, periodically alternating pattern of length

$$N = \sum_{i=0}^{M-1} (a_i + b_i),$$

comprising the general parameters M, $a_i$, $b_i$ which can be appropriately varied for optimum adaptation to specific and especially also spectral characteristics of the physical channel used, is shown by way of example in Figure 2.

Such specific characteristics, which must be taken into consideration, are usually dependent, in particular, on the hardware operators involved in each case.

Using an alternating signal comprising a multiplicity of logical "1-0" and "0-1" transmissions and thus essentially having no average component, prevents, in particular, a receiving unit of the user-network facility, identified by 2 in Figure 3, from wrongly interpreting as a loss of signal (LOS) the signal deliberately sent by the termination unit. Furthermore, this provides a clock recovery unit 3, which usually follows the receiving unit 2, of the user-network facility with an adequate number of synchronization points for improved clock recovery.

The error signal sequence is preferably generated by using a register facility conducted by means of the appropriate software, indicated by the reference symbol 4 in Figure 3, in order to provide for high flexibility in setting the sequence parameters.

Since all current protocol structures correspond to a standard, a suitable error signal sequence can be set just by generating a pseudo random number sequence.

If, on the other hand, it is known which protocol structures are used by the downstream user-network facility, an optimum error signal sequence can also be selected by using a corresponding software correlation.

**Claims**

**1.** A method for indicating a network-based error which has occurred in a data transmission network during a transmission of data to a user network facility (NNE) coupled to the network (NW), wherein the transmission is terminated after such an error has been detected, and an error signal comprising a pattern sequence which deviates from pattern sequences used for user and/or control data transmission in standardized formats, is generated and supplied to the user network facility (NNE).

2. The method as claimed in Claim 1, characterized in that, as error signal, a periodically alternating pattern sequence comprising a multiplicity of logical "1-0" and "0-1" transitions is generated.

3. The method as claimed in Claim 1 or 2, characterized in that a pattern sequence containing variable parameters is generated.

4. The method as claimed in Claim 1, 2 or 3, characterized in that a pseudo random number sequence is generated.

5. The method as claimed in Claim 1, 2 or 3, characterized in that the pattern sequence is generated by using a software correlation with the user network facility (NNE) .

6. A data transmission network (NW), especially for performing a method according to one of Claims 1 to 4, which is constructed to be transparent with respect to data of different formats, to be transmitted to a user network facility (NNE) coupled to the network, comprising at least one facility (NE) for detecting network-based errors which are occurring and a termination unit (S) allocated to the user network facility, which termination unit, when the error detection facility (NE) responds, generates an error signal having a pattern sequence which deviates from pattern sequences used for user and/or control data transmission in standardized formats.

7. The data transmission network as claimed in Claim 6, characterized in that it comprises an optical network (NW).

8. The data transmission network as claimed in Claim 6 or 7, characterized in that the termination unit comprises a software-controlled register facility (4).

Fig. 1

Fig. 2

$$a_0 \times '1' \quad b_0 \times '0' \quad a_i \times '1' \quad b_i \times '0' \quad a_{(M-1)} \times '1' \quad b_{(M-1)} \times '0'$$

Fig. 3

European Patent Office

## EUROPEAN SEARCH REPORT

Application Number

EP 00 31 0069

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 212 475 A (THOMA WOLFANG) 18 May 1993 (1993-05-18) * column 1, line 6-12 * * column 1, line 38-56 * * column 2, line 7-21 * * column 3, line 14-32 * * column 3, line 64 – column 4, line 8 * | 1-3,6 | H04J3/14 |
| A | US 4 754 456 A (YATO YOSHIAKI ET AL) 28 June 1988 (1988-06-28) * the whole document * | 1-8 | |
| | | | **TECHNICAL FIELDS SEARCHED (Int.Cl.7)** |
| | | | H04J |

The present search report has been drawn up for all claims

| Place of search | Date of completion of the search | Examiner |
|---|---|---|
| THE HAGUE | 4 January 2001 | Traverso, A |

EPO FORM 1503 03.82 (P04C01)

## ANNEX TO THE EUROPEAN SEARCH REPORT
## ON EUROPEAN PATENT APPLICATION NO.

EP 00 31 0069

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2001

| Patent document cited in search report | | Publication date | Patent family member(s) | | Publication date |
|---|---|---|---|---|---|
| US 5212475 | A | 18-05-1993 | AT | 113149 T | 15-11-1994 |
| | | | AU | 599537 B | 19-07-1990 |
| | | | AU | 3488289 A | 23-11-1989 |
| | | | BR | 8902289 A | 09-01-1990 |
| | | | CA | 1327061 A | 15-02-1994 |
| | | | DE | 58908511 D | 24-11-1994 |
| | | | EP | 0342547 A | 23-11-1989 |
| | | | ES | 2061781 T | 16-12-1994 |
| | | | JP | 2022956 A | 25-01-1990 |
| | | | JP | 6093664 B | 16-11-1994 |
| | | | NO | 892001 A | 20-11-1989 |
| US 4754456 | A | 28-06-1988 | AU | 577463 B | 22-09-1988 |
| | | | AU | 5663086 A | 23-10-1986 |
| | | | CA | 1251583 A | 21-03-1989 |
| | | | DE | 3673735 D | 04-10-1990 |
| | | | EP | 0215957 A | 01-04-1987 |
| | | | HK | 47092 A | 03-07-1992 |
| | | | WO | 8605939 A | 09-10-1986 |
| | | | JP | 6040637 B | 25-05-1994 |
| | | | JP | 62502719 T | 15-10-1987 |
| | | | SG | 46592 G | 12-06-1992 |